# FASCICULE DE BREVET EUROPEEN

(11) **EP 1 991 444 B1**
(45) Date de publication et mention de la délivrance du brevet: **13.01.2010**
(21) Numéro de dépôt: 07731653.7
(22) Date de dépôt: 21.02.2007
(51) Int. Cl.: B60R 16/04

(54) **EMBASE DE BATTERIE DE VEHICULE AUTOMOBILE ET BOITE DE PROTECTION THERMIQUE D'UNE BATTERIE POURVUE D'UNE TELLE EMBASE**
BATTERIETRÄGER EINES KRAFTFAHRZEUGS UND WÄRMESCHUTZKASTEN FÜR EINE BATTERIE MIT DERARTIGEM TRÄGER
MOTOR-VEHICLE BATTERY TRAY AND THERMAL PROTECTION BOX FOR A BATTERY PROVIDED WITH SUCH A TRAY

(30) Priorité: 06.03.2006 FR 0601963
(43) Date de publication de la demande: 19.11.2008
(73) Titulaire: RENAULT S.A.S., 92100 Boulogne Billancourt (FR)
(72) Inventeur: BERNARD, Denis, F-78960 Voisins-le-Bretonneux (FR); CARMONA, Pedro, F-78180 Montigny-le-Bretonneux (FR); ROY, Arnaud, F-92160 Antony (FR); SAUBION, Mathieu, F-78180 Montigny-le-bretonneux (FR)
(86) Numéro de dépôt international: PCT/FR2007/050833
(87) Numéro de publication internationale: WO 2007/101954

(56) Documents cités:
- US-A- 5 031 712
- US-A- 5 484 667
- US-A- 5 542 489
- US-A1- 2004 065 491

## Description

L'invention concerne une embase de batterie de véhicule automobile, ainsi qu'une boîte de protection thermique de batterie pourvue d'une telle embase.

Les batteries de véhicule automobile, placées à l'intérieur du compartiment moteur, ne sont protégées par aucune pièce, ce qui engendre leur usure prématurée en raison des températures élevées auxquelles elles sont soumises.

Seul un support, généralement en aluminium, sur lequel la batterie repose, permet d'emmagasiner la chaleur produite par le moteur et de réduire l'exposition de la batterie à la chaleur. Cette protection est toutefois insuffisante, l'énergie calorifique emmagasinée par le support se dispersant très lentement, ce qui agit de manière défavorable sur la durée de vie de la batterie.

Par ailleurs, en cas de détérioration de la batterie, des fuites acides peuvent survenir et endommager fortement les pièces en contact avec la batterie.

Le document US - A - 5 031 712, considéré comme étant l'état de la technique le plus proche de l'invention décrit le préambule de la revendication 1: une embase de batterie de véhicule automobile destinée à recevoir la base de la batterie et à être placée sur un support de batterie faisant partie du véhicule.

Certaines batteries sont conçues avec des échangeurs de chaleur internes afin de les protéger contre la chaleur, tel que décrit par exemple dans les documents FR 2 867 613, FR2 768 557, FR 2 779 872, ou US 5 569 552. De telles batteries comportent des doubles parois ou des circuits internes de circulation de fluide, de sorte qu'elles sont complexes et coûteuses à réaliser. De plus, la détérioration des échangeurs de chaleur internes peut endommager les composants de la batterie. Enfin, dans certains cas, des dispositifs de refroidissement externes à la batterie doivent être prévus dans certaines conditions, ce qui augmente l'encombrement de la batterie.

L'invention vise à pallier ces inconvénients en proposant une embase de batterie et une boîte de protection thermique de batterie qui permettent d'améliorer la protection thermique de la batterie, et par conséquent d'augmenter sa durée de vie.

A cet effet, l'objet de l'invention concerne une embase de batterie de véhicule automobile destinée recevoir la base de la batterie et à être placée sur un support de batterie faisant partie du véhicule,
caractérisée en ce qu'elle comprend une paroi de fond apte à recevoir la base de la batterie, cette paroi comportant une face interne destinée à recevoir la base de la batterie et une face externe destinée à reposer sur le support de batterie, et en ce que les faces interne et externe sont chacune pourvues d'une pluralité de lamelles s'étendant sensiblement perpendiculairement à la paroi de fond.

La base de la batterie repose alors sur les lamelles de la face interne de l'embase, l'embase elle-même reposant sur le support de batterie au moyen des lamelles de sa face externe. Cet agencement a pour effet de produire des circuits d'air, entre la batterie et l'embase d'une part, et entre l'embase et le support de batterie d'autre part, qui viennent atténuer la chaleur issue du support de batterie.

Les lamelles présentent également l'avantage de rigidifier l'embase.

Avantageusement, les lamelles sont réparties régulièrement sur au moins une partie des faces interne et externe, ce qui permet une meilleure répartition des efforts subis par les lamelles.

Par ailleurs, en cas de détérioration de la batterie, il peut arriver que des fuites acides s'écoulent de la batterie et endommagent fortement les pièces en contact avec la batterie.

La présente invention vise également à résoudre ce problème en proposant une embase dont la paroi de fond est pourvue d'un orifice d'évacuation des liquides débouchant du côté de la face externe de la paroi sur un tuyau d'évacuation, et dont les lamelles de la face interne sont agencées de manière à former un circuit d'évacuation acheminant les liquides à l'orifice d'évacuation.

Grâce au tuyau d'évacuation, les éventuelles fuites acides peuvent ainsi s'écouler à distance des pièces proches de la batterie, sans risque de les endommager.

Avantageusement, l'embase est pourvue d'orifices de fixation destinés à recevoir des organes de fixation sur le support de batterie, et ces orifices de fixation sont disposés en dehors du circuit d'évacuation. Ainsi, en cas de fuites acides, les organes de fixation ne sont pas endommagées, et la batterie reste solidement fixée à son support.

De préférence, l'embase est réalisée en un matériau à base de polypropylène.

L'invention concerne également une boîte de protection thermique pour une batterie de véhicule automobile, caractérisée en ce qu'elle comprend un carter, un capot et une embase selon l'invention, le carter étant relié à l'embase et au capot de manière à former une boîte apte à loger une batterie.

Une telle boîte permet d'améliorer la protection thermique de la batterie procurée par l'embase selon l'invention, et ainsi de prolonger la durée de vie de la batterie.

Avantageusement, les dimensions du carter et du capot sont choisies de manière à ménager un espace entre la batterie à loger et les parois internes de la boîte de protection, ceci afin d'assurer une circulation d'air tout autour de la batterie.

Avantageusement, le capot présente des ouvertures d'aération qui permettent l'évacuation de l'air chaud circulant autour de la batterie à l'intérieur de la boîte, et évitent l'accumulation d'air chaud autour de la batterie. Ces ouvertures peuvent également être utilisées pour le passage des câbles de connexion de la batterie.

L'invention est maintenant décrite en référence aux dessins annexés, non limitatifs, dans lesquels :
- la figure 1 est une vue de côté d'une boîte de protection thermique selon l'invention ;
- la figure 2 est une vue en perspective du dessus de l'embase de la boîte représentée sur la figure 1 ;

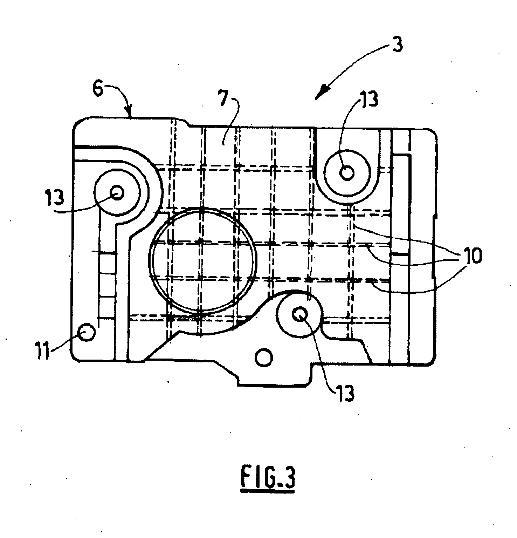

- la figure 3 et une vue en perspective du dessous de l'embase de la boîte représentée sur la figure 1.

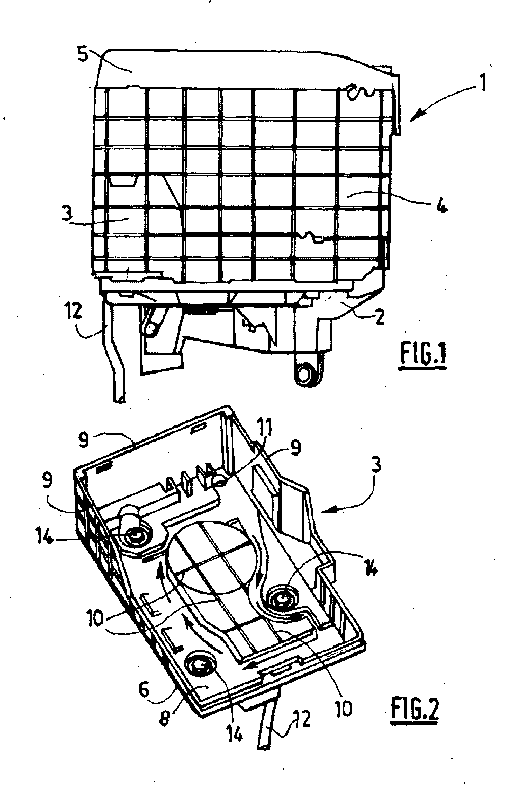

La figure 1 représente une boîte de protection thermique 1 d'une batterie (non représentée) destinée à reposer sur un support en aluminium 2 situé dans le compartiment moteur du véhicule.

La boîte de protection thermique 1 comprend une embase 3, un carter 4 et un capot 5. Le carter 4 est relié à l'embase 3 et au capot 5 de manière à former une boîte fermée apte à loger une batterie.

Les dimensions du carter et du capot sont de préférence choisies de manière à ménager un espace entre la batterie à loger et les parois internes de la boîte de protection afin de faciliter une circulation d'air.

De préférence, le capot 5 présente également des ouvertures d'aération (non représentées) afin de favoriser l'évacuation de l'air chaud par le haut de la boîte de protection thermique 1.

L'embase 3 présente une paroi de fond 6 destinée à reposer sur le support de batterie 2 du côté de sa face externe 7, et à recevoir la batterie du côté de sa face interne 8. L'embase comporte également des parois latérales 9 sur lesquelles va venir s'ajuster le carter 4.

Selon l'invention, les faces externe 7 et interne 8 sont chacune pourvues d'une pluralité de lamelles 10 s'étendant sensiblement perpendiculairement à la paroi de fond 6. Ces lamelles 10 permettent de ménager un espace entre la batterie et l'embase d'une part, et l'embase et le support de batterie d'autre part, la batterie reposant sur les bords libres des lamelles 10 de la face interne 8, et l'embase reposant sur les bords libres des lamelles 10 de la face externe 7. La présence des lamelles permet également de renforcer la structure de l'embase, qui est ainsi plus résistante.

De préférence, les lamelles 10 s'étendent sur au moins la moitié de la surface de chaque face de la paroi de fond 6.

De préférence, la hauteur de ces lamelles est choisie de manière à permettre la création d'un coussin d'air suffisant pour assurer une évacuation efficace de la chaleur. Cette hauteur est de préférence au moins égale à 1,5 mm environ.

De préférence, l'épaisseur des lamelles est choisie de manière à assurer une résistance mécanique suffisant, les lamelles 10 de la face interne 8 supportant le poids de la batterie, tandis que les lamelles 10 de la face externe 7 supportent le poids de la boîte de protection thermique et de la batterie.

Dans l'exemple représenté, les lamelles 10 sont agencées suivant un quadrillage. Elles sont ainsi réparties régulièrement. Tout autre agencement régulier des lamelles peut toutefois être adopté (par exemple une configuration en nid d'abeilles).

La paroi de fond 6 est également pourvue d'un orifice d'évacuation des liquides 11 débouchant du côté de la face externe 7 de la paroi de fond sur un tuyau d'évacuation 12.

En outre, les lamelles 10 de la face interne 8 sont agencées de manière à former un circuit d'évacuation (symbolisé par les flèches représentées sur la figure 2) acheminant les liquides à l'orifice d'évacuation 11. Dans l'exemple, ce circuit d'évacuation est situé en périphérie de la zone pourvue de lamelles 10.

L'embase 3 est pourvue d'orifices de fixation 13 destinés à recevoir des organes de fixation 14 (vis, rivets ou analogues) sur le support de batterie 2. Ces orifices de fixation 13 sont disposés en dehors du circuit d'évacuation afin d'éviter toute corrosion des organes de fixation 14 par des fuites acides s'écoulant de la batterie.

L'embase, le capot et le carter sont de préférence réalisés séparément dans une matière plastique moulée, par exemple dans un matériau à base de polypropylène, éventuellement renforcé. On peut ainsi utiliser du polypropylène contenant 30% de fibres de verre (PP GF 30).

L'embase est de préférence réalisée d'une pièce, par exemple par moulage.

L'embase, le carter et le capot sont chacun conçus de manière à pouvoir être reliés les uns aux autres. Cette liaison peut être réalisée par emboîtement, par des clips, ou tout autre moyen adapté.

L'embase et la boîte selon l'invention présentent l'avantage d'être indépendantes de la structure de la batterie. Elles peuvent ainsi accueillir différents types de batterie. Elles présentent également l'avantage d'être simples et peu coûteuses à réaliser. Par ailleurs, il n'est pas nécessaire que le carter s'ajuste de façon étanche à l'embase et au capot, de sorte que la réalisation de ces pièces ne nécessite pas de précision élevée et est peu coûteuse.

## Revendications

1. Embase (3) de batterie de véhicule automobile destinée à recevoir la base de la batterie et à être placée sur un support de batterie (2) faisant partie du véhicule, **caractérisée en ce qu'**elle comprend une paroi de fond (6) apte à recevoir la base de la batterie, cette paroi (6) comportant une face interne (8) destinée à recevoir la base de la batterie et une face externe (7) destinée à reposer sur le support de batterie (2), et **en ce que** les faces interne (8) et externe (7) sont chacune pourvues d'une pluralité de lamelles (10) s'étendant sensiblement perpendiculairement à la paroi de fond (6).

2. Embase de batterie selon la revendication 1, **caractérisée en ce que** les lamelles (10) sont réparties régulièrement sur au moins une partie des faces interne et externe.

3. Embase de batterie selon la revendication 1 ou 2, **caractérisée en ce que** la paroi de fond (6) est pourvue d'un orifice d'évacuation (11) des liquides débouchant du côté de la face externe (7) de la paroi (6) sur un tuyau d'évacuation (12), et **en ce que** les lamelles (10) de la face interne (7) sont agencées de manière à former un circuit d'évacuation acheminant les liquides à l'orifice d'évacuation (11).

4. Embase de batterie selon la revendication 3, **caractérisée en ce qu'**elle est pourvue d'orifices de fixation (13) destinés à recevoir des organes (14) de fixation sur le support de batterie, et **en ce que** ces orifices de fixation (13) sont disposés en dehors du circuit d'évacuation.

5. Embase de batterie selon l'une des revendications 1 à 4, **caractérisée en ce qu'**elle est réalisée en un matériau à base de polypropylène.

6. Boîte de protection thermique (1) pour une batterie de véhicule automobile, **caractérisée en ce qu'**elle comprend un carter (4), un capot (5) et une embase (3) selon l'une des revendications 1 à 5, le carter étant relié à l'embase et au capot de manière à former une boîte apte à loger une batterie.

7. Boîte de protection thermique selon la revendication 6, **caractérisée en ce que** les dimensions du carter et du capot sont choisies de manière à ménager un espace entre la batterie à loger et les parois internes de la boîte de protection.

8. Boîte de protection thermique selon la revendication 6 ou 7, **caractérisée en ce que** le capot présente des ouvertures d'aération.

## Claims

1. Motor vehicle battery tray (3) designed to receive the base of the battery and to be placed on a battery support (2) forming part of the vehicle, **characterized in that** it comprises a bottom wall (6) capable of receiving the battery base, this wall (6) comprising an inner face (8) designed to receive the battery base and an outer face (7) designed to rest on the battery support (2), and **in that** the inner face (8) and outer face (7) are each provided with a plurality of slats (10) extending substantially perpendicularly to the bottom wall (6).

2. Battery tray according to Claim 1, **characterized in that** the slats (10) are distributed evenly over at least a portion of the inner and outer faces.

3. Battery tray according to Claim 1 or 2,
**characterized in that** the bottom wall (6) is provided with a liquids drain hole (11) opening on the side of the outer face (7) of the wall (6) onto a drain pipe (12), and **in that** the slats (10) of the inner face (7) are arranged so as to form a drainage circuit carrying the liquids to the drain hole (11).

4. Battery tray according to Claim 3, **characterized in that** it is provided with fastening holes (13) designed to receive members (14) for fastening to the battery support, and **in that** these fastening holes (13) are placed outside the drainage circuit.

5. Battery tray according to one of Claims 1 to 4, **characterized in that** it is made of a polypropylene-based material.

6. Heat protection box (1) for a motor vehicle battery, **characterized in that** it comprises a casing (4), a cover (5) and a tray (3) according to one of Claims 1 to 5, the casing being connected to the tray and to the cover so as to form a box capable of housing a battery.

7. Heat protection box according to Claim 6, **characterized in that** the dimensions of the casing and of the cover are chosen so as to arrange a space between the battery to be housed and the inner walls of the protection box.

8. Heat protection box according to Claim 6 or 7, **characterized in that** the cover has aeration openings.

## Patentansprüche

1. Sockel (3) für Kraftfahrzeugbatterie, der dazu vorgesehen ist, die Fußfläche der Batterie aufzunehmen und auf einem Batterieträger (2), der einen Teil des Fahrzeugs bildet, angeordnet zu werden, **dadurch gekennzeichnet, dass** er eine Bodenwand (6) aufweist, die die Fußfläche der Batterie aufnehmen kann, wobei diese Wand (6) eine Innenfläche (8), die dazu vorgesehen ist, die Fußfläche der Batterie aufzunehmen, und eine Außenfläche (7), die dazu vorgesehen ist, auf dem Batterieträger (2) aufzuliegen, enthält, und dass die Innenfläche (8) und die Außenfläche (7) jeweils mit mehreren Lamellen (10) versehen sind, die sich im Wesentlichen senkrecht zur Bodenwand (6) erstrecken.

2. Batteriesockel nach Anspruch 1, **dadurch gekennzeichnet, dass** die Lamellen (10) wenigstens auf einem Teil der Innenfläche und der Außenfläche regelmäßig verteilt sind.

3. Batteriesockel nach Anspruch 1 oder 2, **dadurch gekennzeichnet, dass** die Bodenwand (6) mit einer Öffnung (11) zum Abführen von Flüssigkeiten versehen ist, die von Seiten der Außenfläche (7) der Wand (6) in einen Abführschlauch (12) mündet, und dass die Lamellen (10) der Innenfläche (7) in der Weise angeordnet sind, dass sie einen Abführungskreis bilden, der die Flüssigkeiten der Abführungsöffnung (11) zuführt.

4. Batteriesockel nach Anspruch 3, **dadurch gekennzeichnet, dass** er mit Befestigungsöffnungen (13) versehen ist, die dazu vorgesehen sind, Organe (14) für die Befestigung am Batterieträger aufzunehmen, und dass die Befestigungsöffnungen (13) außerhalb des Abführungskreises angeordnet sind.

5. Batteriesockel nach einem der Ansprüche 1 bis 4, **dadurch gekennzeichnet, dass** er aus einem Material auf Polypropylenbasis hergestellt ist.

6. Wärmeschutzbehälter (1) für eine Kraftfahrzeugbatterie, **dadurch gekennzeichnet, dass** er einen Kasten (4), eine Abdeckung (5) und einen Sockel (3) nach einem der Ansprüche 1 bis 5 aufweist, wobei der Kasten mit dem Sockel und mit der Abdeckung in der Weise verbunden ist, dass ein Gehäuse gebildet wird, das eine Batterie aufnehmen kann.

7. Wärmeschutzgehäuse nach Anspruch 6, **dadurch gekennzeichnet, dass** die Abmessungen des Kastens und der Abdeckung in der Weise gewählt sind, dass zwischen der aufzunehmenden Batterie und den Innenwänden des Schutzgehäuses ein Zwischenraum gebildet wird.

8. Wärmeschutzgehäuse nach Anspruch 6 oder 7, **dadurch gekennzeichnet, dass** die Abdeckung Belüftungsöffnungen aufweist.
